# EUROPEAN PATENT SPECIFICATION

(11) **EP 3 272 942 B1**
(45) Date of publication and mention of the grant of the patent: **02.12.2020**
(21) Application number: 17177864.0
(22) Date of filing: 26.06.2017
(51) Int. Cl.: E02B 3/12, B63C 7/22, B66C 1/02, F16L 1/24

(54) **ASSEMBLY OF AN UNDERWATER CONCRETE MATTRESS AND A HANDLING TOOL THEREFORE AS WELL AS THE RELATED METHOD OF USE**
ANORDNUNG EINER UNTERWASSERBETONMATRATZE UND HANDHABUNGSWERKZEUG DAFÜR SOWIE DIE DAZUGEHÖRIGE NUTZUNG
ASSEMBLAGE D'UN MATELAS EN BÉTON SOUS-MARIN ET OUTIL DE MANUTENTION ASSOCIÉ ET MÉTHODE D'UTILISATION DE CEUX-LÀ

(30) Priority: 19.07.2016 NL 2017189
(43) Date of publication of application: 24.01.2018
(73) Proprietor: Baggermaatschappij Boskalis B.V., 3356 LK Papendrecht (NL)
(72) Inventor: HILLENAAR, Ronald Stephanes, 3356 LK PAPENDRECHT (NL); WESTERBEEK, Mark, 3356 LK PAPENDRECHT (NL); VAN ZIJL, Robert Jan, 3356 LK PAPENDRECHT (NL)
(74) Representative: Geurts, Franciscus Antonius

(56) References cited:
- US-A- 3 587 506
- US-A- 3 704 679
- US-A- 3 720 433
- US-A- 4 307 977

## Description

### BACKGROUND

The invention relates to an assembly of an underwater concrete mattress and a handling tool for handling the concrete mattress, wherein each concrete mattress comprises a number of concrete blocks which are arranged adjacent to each other within the outer contour of the concrete mattress, wherein the concrete blocks are interconnected to each other by multiple wires extending through the concrete blocks and transitions are present between the concrete blocks.

Such concrete mattresses are used to cover subsea pipelines and umbilicals to protect them from anchors, dragging fishing nets and dropped objects. Currently the method for decommissioning of concrete mattresses is the reverse installation method. The reverse installation method implies that lifting cables have to be connected to the concrete mattress, subsequently the concrete mattress is lifted from the seabed and thus removed from the pipeline or umbilical. Connecting the lifting cables to a concrete mattress has to be done by a diver or a ROV (Remotely Operated Vehicle).

A disadvantage of this method is that it is dangerous for the diver or ROV intensive and very time consuming.

It is an object of the present invention to improve the process of decommissioning concrete mattresses.

### SUMMARY OF THE INVENTION

According to a first aspect, the invention provides an assembly of an underwater concrete mattress and a handling tool for handling the concrete mattress, wherein the concrete mattress comprises a number of concrete blocks which are arranged adjacent to each other within the outer contour of the concrete mattress, wherein the concrete blocks are interconnected to each other by multiple wires extending through the concrete blocks, whereby hingeable transitions are present between the concrete blocks, wherein the handling tool comprises a suction head having a suction head body with an inlet opening at its side that faces the concrete mattress, a flow channel extending through the suction head, and a water pump in fluid communication with the flow channel for pumping water through the flow channel from the inlet opening, wherein the handling tool is moveable between a first position underwater, in which the handling tool is positioned above the concrete mattress, and a second position underwater, in which the suction head is lowered onto the concrete mattress.

A concrete mattress can be handled, for example decommissioned by placing the handling tool onto the concrete mattress such that the suction head is in contact with or proximate to the concrete mattress. The inlet opening is then at least partly obstructed. Subsequently, the pump is activated, which causes a pressure drop between the water inside the flow channel of the suction head and the water outside the suction head. Due to the pressure drop the suction head is sucked onto the concrete mattress. Thereafter, the handling tool can be displaced locally to a predetermined position together with the sucked on concrete mattress.

Due to the handling tool it is no longer necessary to connect lifting cables to the concrete mattress by means of a diver or a ROV. Therefore, concrete mattress can be decommissioned faster than with the reverse installation method. The process of handling concrete mattresses is thus improved and less disruptive.

It is observed that US 3,720,433 discloses a manipulating apparatus using suction cups to engage underwater objects with a smooth surface.

In a preferred embodiment the inlet opening of the suction head extends over a number of concrete blocks and at least one transition therebetween.

In an embodiment the handling tool comprises a frame and two or more suction heads arranged at the frame, wherein the suction heads are spaced apart from each other within the outline of the concrete mattress. Due to the two or more suction heads, the concrete mattress is evenly lifted at multiple points, therewith reducing the suction force needed at each suction head while maintaining the structural integrity of a worn concrete mattress.

In an embodiment the frame is a rectangular frame and the suction heads are arranged at the corners of the rectangular frame. Due to the positioning of the suction heads with respect to each other, sagging of the concrete mattress due to the flexible nature thereof is reduced. Therefore, the risk of an undesired release of the concrete mattress from one or more of the suction heads is reduced. Due to the number of suction heads, the handling tool is less susceptible to variations of the concrete mattresses or the concrete blocks thereof, for example.

In an embodiment the handling tool comprises a flexible seal connected to the suction head body at the circumference of the inlet opening of the suction head for sealing openings between the suction head and the concrete mattress in the second position of the handling tool. By sealing openings between the suction head and the concrete mattress as much as possible, the flow of water into the suction head remains limited, therewith increasing the pressure drop between the water inside the flow channel and the water outside the suction head. As the pressure drop is increased, the suction force for sucking the suction head onto the concrete mattress is further optimized.

In an embodiment the flexible seal comprises flexible flaps of which one end is connected to the suction head body at the circumference of the inlet opening of the suction head, wherein in the first position of the handling tool, a free end of the flaps is orientated towards the concrete mattress, and wherein in the second position of the handling tool, the flaps are spread over the concrete mattress. In the second position of the handling tool, the flaps are folded and lay over the concrete blocks and/or in the transitions between the concrete blocks. In this position, the flaps limit the water flow via the inlet opening into the flow channel.

In an embodiment at least a part of the suction head body of the suction head has a substantially frustoconical shape or a substantially frustopyramidal shape. Due to the shape of the suction head body, a large surface of the concrete mattress may be covered by the inlet opening of the suction head.

In an embodiment the suction head comprises an outlet opening in fluid communication with the flow channel, wherein the outlet opening is located above the inlet opening.

In an embodiment the pump is formed by an axial pump, a centrifugal pomp or an airlift pump. Such a pump is capable of pumping large amounts of liquid which is advantageous for generating and maintaining the pressure drop between the water inside the flow channel and the water outside the suction head.

In an embodiment the handling tool comprises multiple thrusters for maneuvering the handling tool in a water body. In an embodiment thereof a thruster is mounted to the rectangular frame at the front, back and the sides thereof for maneuvering the handling tool in the water body. Due to for example water currents, the position of the handling tool with respect to the concrete mattress may be altered during lowering of the handling tool. By means of the thruster(s), the handling tool can be aligned with respect to the concrete mattress.

In an embodiment the assembly further comprises a ROV (Remotely Operated Vehicle) for maneuvering the handling tool.

In an embodiment the handling tool comprises an umbilical connected to a power supply above the water. It is advantageous that consumables required by the handling tool are provided by one or more powerful external power sources, since it keeps the handling tool relatively simple.

According to a second aspect, the invention provides a method for handling an underwater concrete mattress by using a handling tool, wherein the concrete mattress comprises a number of concrete blocks which are arranged adjacent to each other within the outer contour of the concrete mattress, wherein the concrete blocks are interconnected to each other by multiple wires extending through the concrete blocks, whereby hingeable transitions are present between the concrete blocks, wherein the handling tool comprises a suction head having a suction head body with an inlet opening at its side that faces the concrete mattress, a flow channel extending through the suction head, and a water pump in fluid communication with the flow channel for pumping water through the flow channel from the inlet opening, wherein the handling tool is moveable between a first position underwater, in which the handling tool is positioned above the concrete mattress, and a second position underwater, in which the suction head is lowered onto the concrete mattress, and wherein the method comprises the steps of placing the handling tool in a water body, maneuvering and positioning the handling tool in the first position with respect to the concrete mattress, lowering the handling tool to the second position, activating the pump of the suction head for sucking the concrete mattress onto the suction head, and lifting the handling tool with the concrete mattress, while the pump remains activated.

The method has at least the advantages which are mentioned in relation to the first aspect of the invention.

In a preferred embodiment the inlet opening of the suction head extends over a number of concrete blocks and at least one transition therebetween.

In an embodiment the method comprises the steps of displacing the handling tool with the concrete mattress, and releasing the concrete mattress.

In an embodiment the step of displacing the handling tool with the concrete mattress comprises positioning the handling tool with the concrete mattress above an underwater container or a speedloader, and lowering the handling tool with the concrete mattress into the container or the speedloader. According to this embodiment, multiple concrete mattresses are placed in the underwater container or the speedloader. The underwater container or the speedloader is lifted to the surface when it is filled, thereby further reducing the time needed for handling concrete mattresses.

In an embodiment the step of releasing the concrete mattress comprises de-activating of the pump.

In an embodiment the handling tool comprises multiple thrusters and the step of maneuvering the handling tool with respect to the concrete mattress comprises controlling the one or more thrusters to maneuver the handling tool with respect to the concrete mattress. In an alternative embodiment a ROV is provided and the step of maneuvering the handling tool with respect to the concrete mattress comprises controlling the ROV to maneuver the handling tool with respect to the concrete mattress.

In an embodiment the method comprises the step of activating the pump with a reverse pumping direction for jetting towards the concrete mattress and subsequently de-activating the pump, which step is performed before the step of lowering the handling tool to the second position underwater. Due to this step, sand and/or sludge are flushed away from the concrete mattress prior to lowering the handling tool onto the concrete mattress, which is advantageous for the lifting of the concrete mattress.

In a third aspect, the invention provides a handling tool for use in an assembly according to the first aspect of the invention, or in a method according to a second aspect of the invention.

In a fourth aspect, the invention provides a computer-readable medium having computer-executable instructions adapted to cause a 3D printer to print a handling tool according to the third aspect of the invention.

The individual aspects, in particular the aspects and features described in the attached dependent claims, can be made subject of divisional patent applications.

### BRIEF DESCRIPTION OF THE DRAWINGS

The invention will be elucidated on the basis of exemplary embodiments shown in the attached drawings, in which:
Figure 1A shows an isometric view of an embodiment of an assembly of an underwater concrete mattress and a handling tool for underwater concrete mattresses according to the invention;
Figure 1B shows a side view of the assembly of figure 1;
Figure 2A shows the handling tool of figure 1 lowered onto the concrete mattress;
Figure 2B shows an enlarged isometric view of a part of the handling tool of figure 2A;
Figure 2C shows a top view of the part of the handling tool of figure 2B;
Figure 3 shows the handling tool according to figure 1 while lifting the concrete mattress;
Figure 4 shows the assembly of figure 1 while placing the concrete mattress in a container; and
Figure 5 shows an isometric view of an alternative embodiment of the assembly according to the invention.

### DETAILED DESCRIPTION OF THE INVENTION

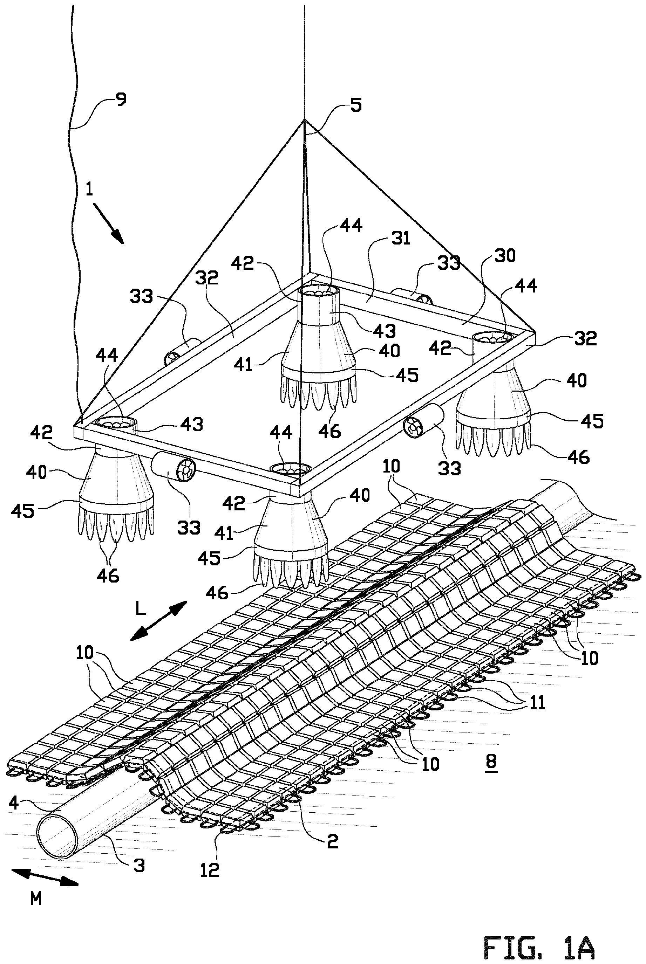

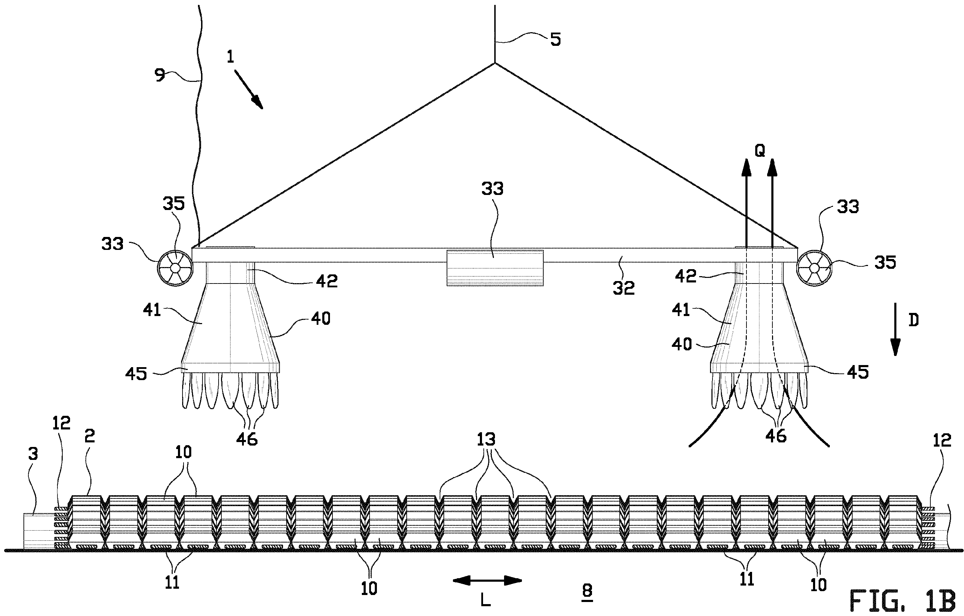

Figures 1 to 4 show an embodiment of an assembly of a handling tool 1 with a concrete mattress 2, wherein the handling tool 1 is provided for handling a concrete mattress 2 which is placed over a pipe 3 on a seabed 8, wherein the pipe 3 is a gas pipe, an oil pipe or an umbilical for example. Although only one concrete mattress 2 is shown in the figures, it is known that in practice multiple concrete mattresses 2 are placed adjacent to each other to cover the pipe 3 over substantially the entire length thereof or locally at a shipping line for example.

As can be seen in figure 1, the concrete mattress 2 comprises a number of concrete blocks 10 with a hexagonal cross-section and a top side and a bottom side substantially parallel to each other. The concrete blocks 10 are placed adjacent to each other in the longitudinal direction L and transversal direction M of the concrete mattress 2. The concrete blocks 10 are hingedly interconnected by means of transversal polypropylene wires 11 that extend through the concrete blocks 10 in the transversal direction M of the mattress 2, and longitudinal polypropylene wires 12 that extend through the concrete blocks 10 in the longitudinal direction L of the mattress 2. Due to the hexagonal shape, V-shaped transitions 13 are present between adjacent concrete blocks 10, such that the concrete mattress 2 is able to be draped in order to follow the outer contour 4 of the pipe 3.

The handling tool 1 is provided for handling the concrete mattress 2 after the service life of the pipe 3. The handling tool 1 is connected to and carried by a non-shown vessel by means of a lifting cable 5. Furthermore, an umbilical cable 9 is connected to the handling tool 1 for powering and controlling the driven parts of the handling tool 1 from the vessel. Optionally, the lifting cable 5 is connected to the vessel via a non-shown heave compensation system, such that the handling tool 1 can hang stable above the concrete mattress despite heaving of the non-shown vessel.

The handling tool 1 comprises a steel frame 30 which is formed by two transversal beams 31 and two longitudinal beams 32, whereby the frame 30 has a rectangular shape. Multiple thrusters 33 are arranged at the transversal and longitudinal beams 31, 32 for maneuvering the handling tool 1 in a horizontal plane while hanging. The thrusters 33 are formed by means of a steel, hollow tube 34 and a screw propeller 35 which is arranged rotatable inside the hollow tube 34. The thrusters 33 may be controlled by an operator at the non-shown ship via the umbilical cable 9. Optionally, cameras may be provided in order to monitor the position of the handling tool 1 with respect to the concrete mattress 2 or the seabed 8.

As can be seen in figure 1A, the handling tool 1 comprises four suction heads 40. Each of the suction heads 40 is provided at a respective corner of the rectangular frame 30, wherein each of the suction heads 40 may be moveable with respect to the rectangular frame 30. Each of the suction heads 40 comprises a steel, hollow, frustoconical suction body 41 that merges into a leading ring 45 that circumscribes an inlet opening. The inlet opening has such a diameter, that when the handling device 1 is lowered onto the concrete mattress 2, the inlet opening extends over a number of concrete blocks 10 and at least one transition 13 therebetween or therein between.

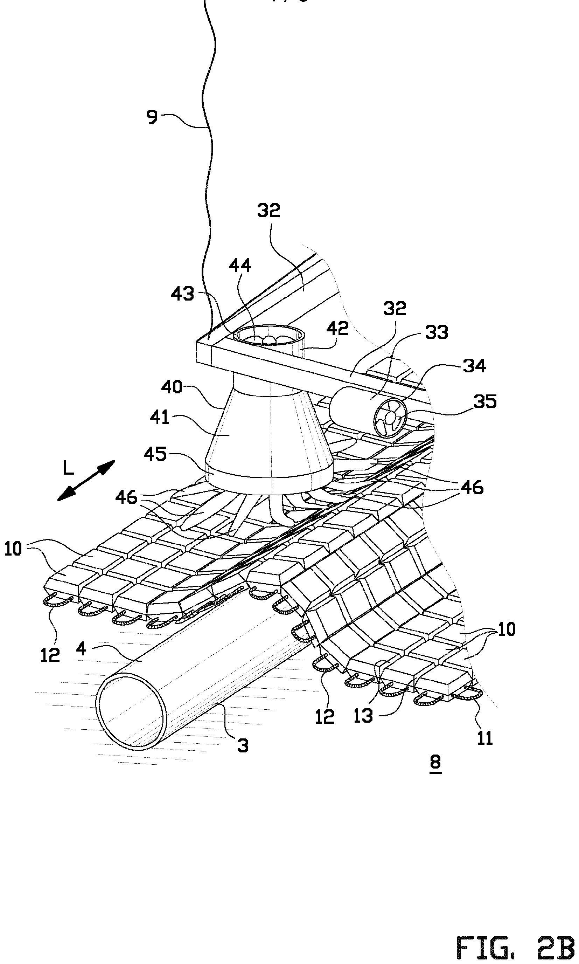

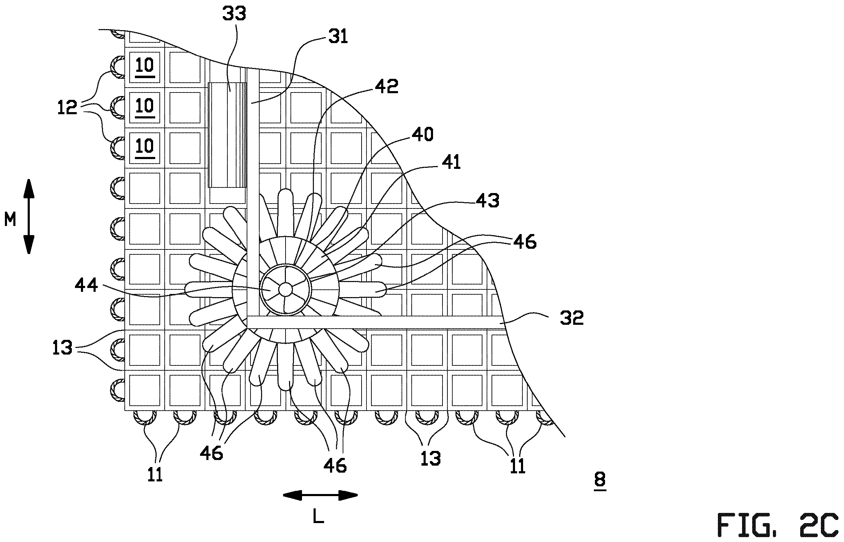

The suction heads 40 are provided with multiple flexible rubber flaps 46 which are connected to the leading ring 45 at one end thereof, as best shown in figure 1B. The rubber flaps 46 extend from the leading ring 45 in a downward direction D towards the concrete mattress 2. As best shown in figures 2B and 2C, when the handling device 1 is placed onto the concrete mattress 2, the rubber flaps 46 are folded and may spread out over the concrete blocks 10 and, optionally, in the transitions 13 between the concrete blocks. In this position, the flaps 46 block or reduce a water flow towards the suction head 40, in particular through the V-shaped transitions 13.

At the top end, the frustoconical suction body 41 is connected to a water pump 42. The pump 42 is formed by a steel, hollow tube 43 and a screw propeller 44, also called an axial pump, which is arranged rotatable inside the hollow tube 43. When the pump 42 is activated, water is sucked into the frustoconical body 41 at the inlet opening thereof and leaves the pump 42 at its outlet opening in the direction Q. The pumps 42 of the suction heads 40 may be controlled by an operator at the non-shown ship via the umbilical cable 9. The pumps 42 are also rotatable in a reverse direction in order to jet towards the concrete mattress 2.

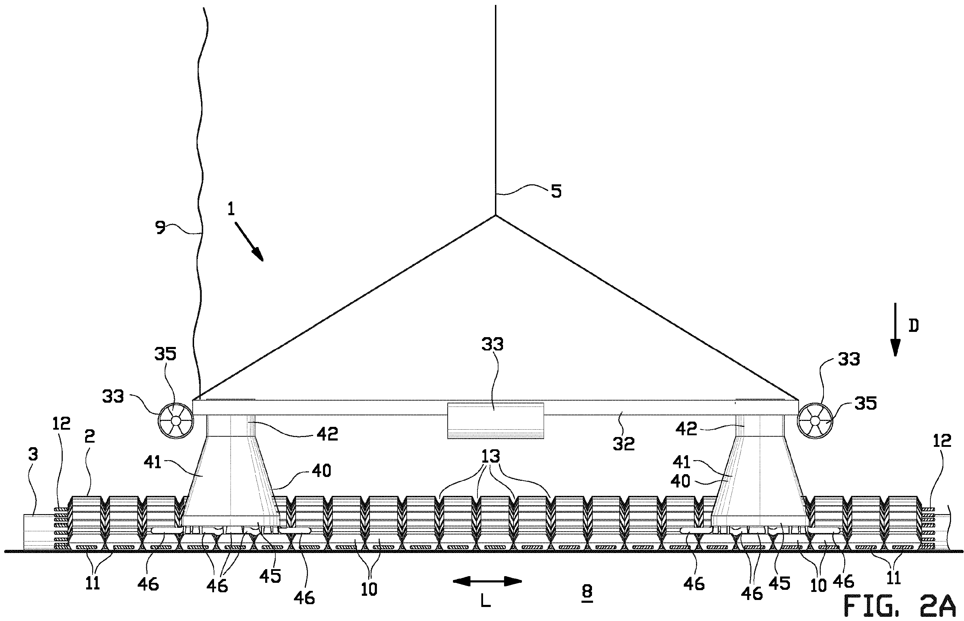

In order to decommission a concrete mattress 2, the handling tool 1 is first brought into a position hanging above the concrete mattress 2, as is best shown in figures 1A and 1B. This is done by selectively powering the thrusters 33. Thereafter, the pumps 42 are firstly activated with a reverse pumping direction to jet water in the downwards direction D, such that sand and sludge lying on the concrete mattress 2 is flushed away from the concrete mattress 2. Subsequently, the pumps 42 are de-activated and the handling tool 1 is moved downwards in the direction D under influence of gravity until the leading rings 45 of the suction heads 40 are proximate to or in contact with the concrete mattress 2 while the flaps 46 come into contact with the concrete mattress 2. When the handling tool 1 is placed onto the concrete mattress 2, as is shown in figure 2A, the pumps 42 of the suction heads 40 are activated. Due to the pumps 42 sucking water through the suction heads 40 and due to the inlet opening being partly blocked by the concrete blocks 10, a pressure drop between the water outside of the suction heads 40 and the water inside the suction heads 40 will arise. Any sand lying on the concrete mattress 2 is also removed by the suction head 40 and due to the open structure of the concrete mattress 2, also sand lying directly under the concrete mattress 2 may be sucked away into the suction head 40, thereby locally releasing the concrete mattress 2 from the seabed 8. The inlet opening of each of the suction heads 40 has a radius which in combination with the pressure drop is sufficient to generate a suction force for lifting the concrete mattress 2.

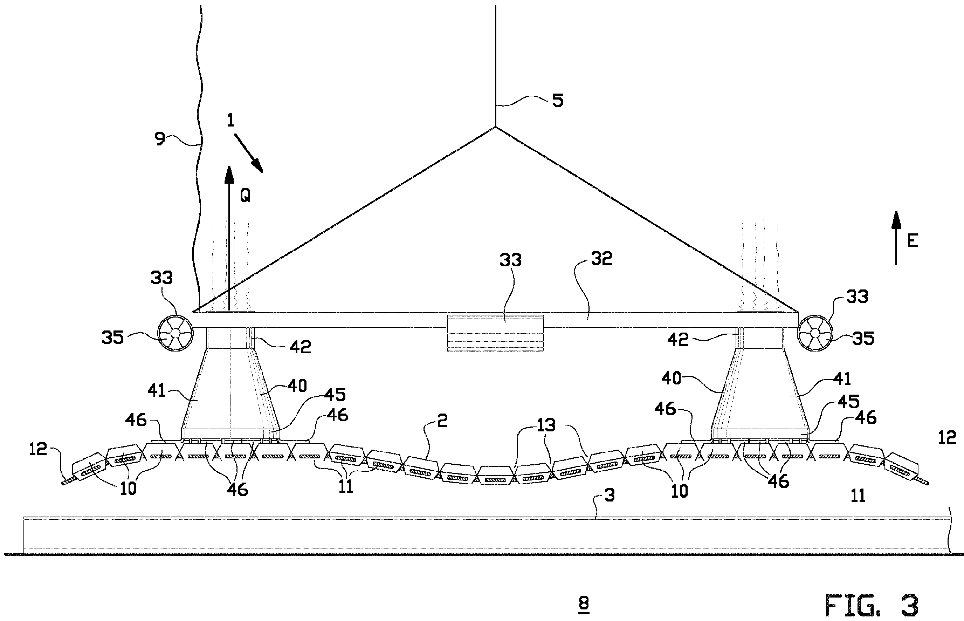

Due to the pressure drop, the suction heads 40 are sucked onto the concrete mattress 2 and remain sucked onto the concrete mattress 2. Subsequently, the handling tool 1 and the concrete mattress 2 are lifted upwards in the direction E, as is best shown in figure 3. During lifting of the concrete mattress 2, the pumps 42 of each of the suction heads 40 keep pumping in order to keep the concrete mattress 2 in lifting contact.

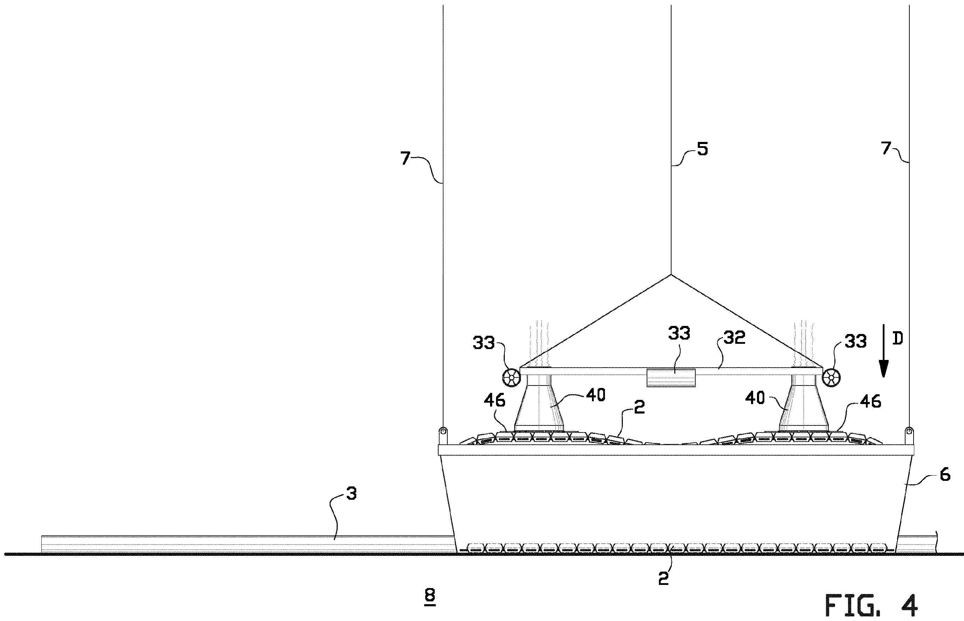

After having lifted the concrete mattress 2 sufficiently to release the concrete mattress 2 from the pipe 3, the concrete mattress 2 can be gently moved locally in any direction substantially parallel to the seabed 8. As best shown in figure 4, the concrete mattress 2 is positioned above an underwater container 6 or speedloader for holding concrete mattresses 2. Subsequently, the handling tool 1 and the concrete mattress 2 are moved downwards in direction D for placing the mattress 2 onto another concrete mattress 2. When the concrete mattress 2 is placed inside the container 6 or speedloader, the pumps 42 are de-activated whereby the concrete mattress 2 is released. The container 6 or speedloader can be lifted towards the non-shown vessel by means of the lifting cables 7 when multiple concrete mattresses 2 are placed inside the container 6.

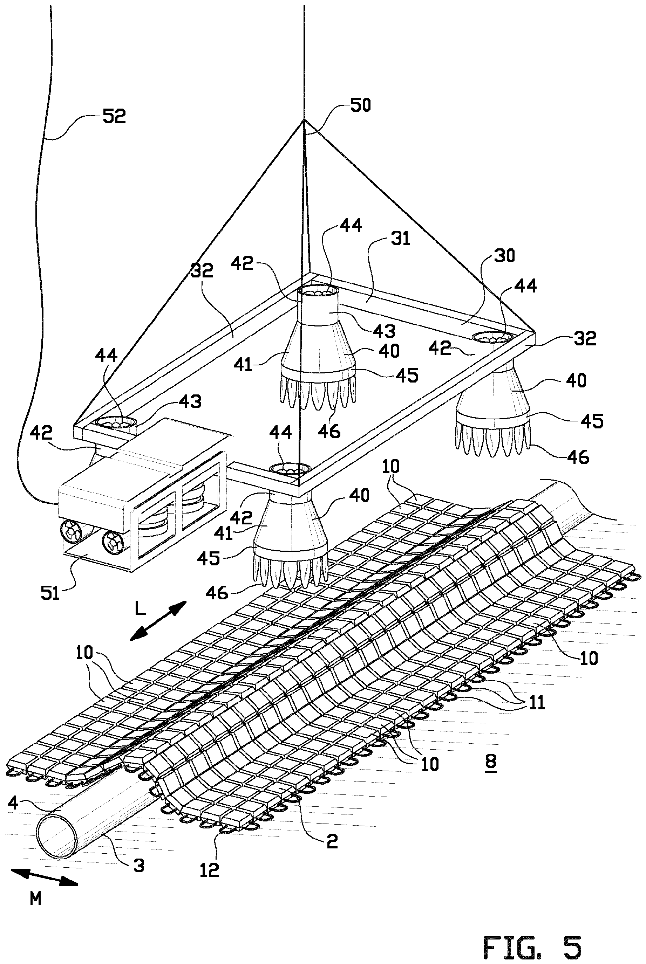

Figure 5 shows an alternative embodiment of the assembly. The handling tool 1 comprises also the rectangular frame 30 with four suction heads 40 which are provided at the respective corners of the rectangular frame 30. The handling tool 1 is lifted by means of the lifting cable 50 which is connected to a lifting system of the non-shown vessel. Instead of thrusters 33, a ROV (Remotely Operated Vehicle) 51 is coupled to the frame 30 of the handling tool 1 for maneuvering it in the water. The ROV 51 may be connected to the non-shown vessel by means of an umbilical cable 52 and may be adapted to provide the required power to the suction heads 40.

Although the decommissioning of a concrete mattress 2 is described, it is also possible to install a concrete mattress 2 by means of the handling tool 1. In that case, the handling tool 1 is placed onto a concrete mattress 2 when the latter is placed in an underwater container 6 or carried by a speedloader. Thereafter the pumps 42 are activated as is described above and the concrete mattress 2 can be moved to a desired position, in which the concrete mattress 2 is placed over a gas pipe, an oil pipe or an umbilical for example.

It is to be understood that the above description is included to illustrate the operation of the preferred embodiments and is not meant to limit the scope of the invention as defined by the appended claims. From the above discussion, many variations will be apparent to one skilled in the art that would yet be encompassed by the scope of the present invention as defined by the appended claims.

## Claims

1. Assembly of an underwater concrete mattress (2) and a handling tool (1) for handling the concrete mattress, wherein the concrete mattress comprises a number of concrete blocks (10) which are arranged adjacent to each other within the outer contour of the concrete mattress, wherein the concrete blocks are interconnected to each other by multiple wires (11) extending through the concrete blocks, whereby hingeable transitions (13) are present between the concrete blocks, wherein the handling tool (1) comprises a suction head (40) having a suction head body (41) with an inlet opening at its side that faces the concrete mattress, a flow channel extending through the suction head (40), and a water pump (42) in fluid communication with the flow channel for pumping water through the flow channel (Q) from the inlet opening, wherein the handling tool (1) is moveable between a first position underwater, in which the handling tool is positioned above the concrete mattress (2), and a second position underwater, in which the suction head (40) is lowered onto the concrete mattress (2).

2. Assembly according to claim 1, wherein the inlet opening of the suction head (40) extends over a number of concrete blocks and at least one transition therebetween.

3. Assembly according to claim 1 or 2, wherein the handling tool (1) comprises a frame (30) and two or more suction heads (40) arranged at the frame, wherein the suction heads are spaced apart from each other within the outline of the concrete mattress (2), wherein the frame (30) is preferably a rectangular frame and the suction heads (40) are arranged at the corners of the rectangular frame.

4. Assembly according to any one of the preceding claims, wherein the handling tool (1) comprises a flexible seal (46) connected to the suction head body (41) at the circumference (45) of the inlet opening of the suction head for sealing openings between the suction head (40) and the concrete mattress (2) in the second position of the handling tool (1), wherein the flexible seal preferably comprises flexible flaps (46) of which one end is connected to the suction head body at the circumference (45) of the inlet opening of the suction head, wherein in the first position of the handling tool (1), a free end of the flaps (46) is orientated towards the concrete mattress (2), and wherein in the second position of the handling tool (1), the flaps (46) are spread over the concrete mattress (2).

5. Assembly according to any of the preceding claims, wherein at least a part of the suction head body (41) of the suction head (40) has a substantially frustoconical shape or a substantially frustopyramidal shape, wherein the suction head (40) preferably comprises an outlet opening in fluid communication with the flow channel, wherein the outlet opening is located above the inlet opening.

6. Assembly according to any one of the preceding claims, wherein the handling tool (1) comprises multiple thrusters (33) for maneuvering the handling tool in a water body.

7. Assembly according to claims 3 and 6, wherein a thruster (33) is mounted to the rectangular frame (30) at the front, back and the sides thereof for maneuvering the handling tool (1) in the water body.

8. Assembly according to any one of the preceding claims, further comprising a ROV (51) (Remotely Operated Vehicle) for maneuvering the handling tool (1).

9. Method for handling an underwater concrete mattress (2) by using a handling tool (1), wherein the concrete mattress comprises a number of concrete blocks (10) which are arranged adjacent to each other within the outer contour of the concrete mattress, wherein the concrete blocks are interconnected to each other by multiple wires (11) extending through the concrete blocks, whereby hingeable transitions (13) are present between the concrete blocks, wherein the handling tool (1) comprises a suction head (40) having a suction head body (41) with an inlet opening at its side that faces the concrete mattress, a flow channel extending through the suction head (40), and a water pump (42) in fluid communication with the flow channel for pumping water through the flow channel (Q) from the inlet opening, wherein the handling tool (1) is moveable between a first position underwater, in which the handling tool is positioned above the concrete mattress (2), and a second position underwater, in which the suction head (40) is lowered onto the concrete mattress (2), and wherein the method comprises the steps of placing the handling tool (1) in a water body, maneuvering and positioning the handling tool (1) in the first position with respect to the concrete mattress (2), lowering the handling tool (1) to the second position, activating the pump (42) of the suction head (40) for sucking the concrete mattress (2) onto the suction head, and lifting the handling tool (1) with the concrete mattress (2), while the pump (42) remains activated.

10. Method according to claim 9, wherein the inlet opening of the suction head (40) extends over a number of concrete blocks and at least one transition therebetween.

11. Method according to claim 9 or 10, comprising the steps of displacing the handling tool (1) with the concrete mattress (2), and releasing the concrete mattress, wherein the step of displacing the handling tool (1) with the concrete mattress (2) preferably comprises positioning the handling tool (1) with the concrete mattress (2) above an underwater container (6) or a speedloader and lowering the handling tool (1) with the concrete mattress (2) into the container (6) or the speedloader, wherein the step of releasing the concrete mattress (2) comprises de-activating of the pump (42).

12. Method according to any one of the claims 9-11, wherein the handling tool (1) comprises multiple thrusters (33), wherein the step of maneuvering the handling tool (1) with respect to the concrete mattress (2) comprises controlling the one or more thrusters to maneuver the handling tool with respect to the concrete mattress.

13. Method according to any one of the claims 9-12, wherein a ROV (51) is provided, wherein the step of maneuvering the handling tool (1) with respect to the concrete mattress (2) comprises controlling the ROV (51) to maneuver the handling tool with respect to the concrete mattress.

14. Method according to any one of the claims 9-13, comprising the step of activating the pump (42) with a reverse pumping direction for jetting towards the concrete mattress (2) and subsequently de-activating the pump (42), which step is performed before the step of lowering the handling tool (1) to the second position underwater.

15. Computer-readable medium having computer-executable instructions adapted to cause a 3D printer to print a handling tool (1) according to any one of the preceding claims.

## Patentansprüche

1. Anordnung bestehend aus einer Unterwasserbetonmatratze (2) und einem Handhabungswerkzeug (1) zum Manipulieren der Betonmatratze, wobei die Betonmatratze eine Mehrzahl von Betonblöcken (10) umfasst, die innerhalb des Außenumrisses der Betonmatratze nebeneinander angeordnet sind, wobei die Betonblöcke durch mehrere Drähte (11) miteinander verbunden sind, die sich durch die Betonblöcke hindurch erstrecken, wodurch zwischen den Betonblöcken gelenkartige Übergänge (13) vorhanden sind, wobei das Handhabungswerkzeug (1) einen Saugkopf (40) aufweist, umfassend einen Saugkopfkorpus (41), der an seiner der Betonmatratze zugewandten Seite eine Einlassöffnung aufweist, einen sich durch den Saugkopf (40) erstreckenden Strömungskanal, und eine Wasserpumpe (42) in Fluidverbindung mit dem Strömungskanal zum Pumpen von Wasser von der Einlassöffnung durch den Strömungskanal (Q), wobei das Handhabungswerkzeug (1) bewegbar ist zwischen einer ersten Position unter Wasser, in der das Handhabungswerkzeug über der Betonmatratze (2) angeordnet ist, und einer zweiten Position unter Wasser, in welcher der Saugkopf (40) auf die Betonmatratze (2) abgesenkt ist.

2. Anordnung nach Anspruch 1, wobei sich die Einlassöffnung des Saugkopfes (40) über eine Mehrzahl von Betonblöcken und mindestens einen Übergang zwischen diesen erstreckt.

3. Anordnung nach Anspruch 1 oder 2, wobei das Handhabungswerkzeug (1) einen Rahmen (30) sowie zwei oder mehr an dem Rahmen angeordnete Saugköpfe (40) umfasst, wobei die Saugköpfe innerhalb des Umrisses der Betonmatratze (2) voneinander beabstandet sind, wobei der Rahmen (30) vorzugsweise ein rechteckiger Rahmen ist und die Saugköpfe (40) an den Ecken des rechteckigen Rahmens angeordnet sind.

4. Anordnung nach einem der vorhergehenden Ansprüche, wobei das Handhabungswerkzeug (1) eine flexible Dichtung (46) umfasst, die am Umfangsrand (45) der Einlassöffnung des Saugkopfes mit dem Saugkopfkorpus (41) verbunden ist, um in der zweiten Position des Handhabungswerkzeugs (1) Öffnungen zwischen dem Saugkopf (40) und der Betonmatratze (2) abzudichten, wobei die flexible Dichtung vorzugsweise flexible Lappen (46) umfasst, deren eines Ende am Umfangrand (45) der Einlassöffnung des Saugkopfes mit dem Saugkopfkorpus verbunden ist, wobei in der ersten Position des Handhabungswerkzeugs (1) ein freies Ende der Lappen (46) zur Betonmatratze (2) hin ausgerichtet ist und wobei in der zweiten Position des Handhabungswerkzeugs (1) die Lappen (46) über der Betonmatratze (2) ausgebreitet sind.

5. Anordnung nach einem der vorhergehenden Ansprüche, wobei zumindest ein Teil des Saugkopfkorpus (41) des Saugkopfes (40) eine im Wesentlichen kegelstumpfförmige Form oder eine im Wesentlichen pyramidenstumpfförmige Form aufweist, wobei der Saugkopf (40) vorzugsweise eine Auslassöffnung in Fluidverbindung mit dem Strömungskanal aufweist, wobei sich die Auslassöffnung oberhalb der Einlassöffnung befindet.

6. Anordnung nach einem der vorhergehenden Ansprüche, wobei das Handhabungswerkzeug (1) mehrere Schubdüsen (33) zum Manövrieren des Handhabungswerkzeugs in einem Gewässer umfasst.

7. Anordnung nach den Ansprüchen 3 und 6, wobei zum Manövrieren des Handhabungswerkzeugs (1) in dem Gewässer jeweils ein Triebwerk (33) an der Vorderseite, der Rückseite sowie an den Seiten an dem rechteckigen Rahmen (30) angebracht ist.

8. Anordnung nach einem der vorhergehenden Ansprüche, ferner umfassend ein ferngesteuertes Fahrzeug (ROV) (51) zum Manövrieren des Handhabungswerkzeugs (1).

9. Verfahren zum Manipulieren einer Unterwasserbetonmatratze (2) unter Verwendung eines Handhabungswerkzeugs (1), wobei die Betonmatratze eine Mehrzahl von Betonblöcken (10) umfasst, die innerhalb des Außenumrisses der Betonmatratze nebeneinander angeordnet sind, wobei die Betonblöcke durch mehrere Drähte (11) miteinander verbunden sind, die sich durch die Betonblöcke hindurch erstrecken, wodurch zwischen den Betonblöcken gelenkartige Übergänge (13) vorhanden sind, wobei das Handhabungswerkzeug (1) einen Saugkopf (40) aufweist, umfassend einen Saugkopfkorpus (41) mit einer Einlassöffnung an seiner der Betonmatratze zugewandten Seite, einen sich durch den Saugkopf (40) erstreckenden Strömungskanal sowie und eine Wasserpumpe (42) in Fluidverbindung mit dem Strömungskanal zum Pumpen von Wasser von der Einlassöffnung durch den Strömungskanal (Q), wobei das Handhabungswerkzeug (1) bewegbar ist zwischen einer ersten Position unter Wasser, in der das Handhabungswerkzeug über der Betonmatratze (2) angeordnet ist, und einer zweiten Position unter Wasser, in welcher der Saugkopf (40) auf die Betonmatratze (2) abgesenkt ist, und wobei das Verfahren folgende Schritte umfasst: Platzieren des Handhabungswerkzeugs (1) in einem Gewässer, Manövrieren und Positionieren des Handhabungswerkzeugs (1) in der ersten Position in Bezug auf die Betonmatratze (2), Absenken des Handhabungswerkzeugs (1) in die zweite Position, Anstellen der Pumpe (42) des Saugkopfes (40), um die Betonmatratze (2) an den Saugkopf anzusaugen, und Anheben des Handhabungswerkzeugs (1) mit der Betonmatratze (2), während die Pumpe (42) aktiviert bleibt.

10. Verfahren nach Anspruch 9, wobei sich die Einlassöffnung des Saugkopfes (40) über eine Mehrzahl von Betonblöcken und mindestens einen Übergang zwischen diesen erstreckt.

11. Verfahren nach Anspruch 9 oder 10, umfassend die Schritte des Verschiebens des Handhabungswerkzeugs (1) zusammen mit der Betonmatratze (2) und des Freigebens der Betonmatratze, wobei der Schritt des Verschiebens des Handhabungswerkzeugs (1) zusammen mit der Betonmatratze (2) vorzugsweise das Positionieren des Handhabungswerkzeugs (1) mit der Betonmatratze (2) über einem Unterwasserbehälter (6) oder einer Schnellladevorrichtung sowie das Absenken des Handhabungswerkzeugs (1) mit der Betonmatratze (2) in den Behälter (6) oder in die Schnellladevorrichtung hinein umfasst, wobei der Schritt des Freigebens der Betonmatratze (2) das Abstellen der Pumpe (42) umfasst.

12. Verfahren nach einem der Ansprüche 9 - 11, wobei das Handhabungswerkzeug (1) mehrere Schubdüsen (33) umfasst, wobei der Schritt des Manövrierens des Handhabungswerkzeugs (1) in Bezug auf die Betonmatratze (2) das Steuern der einen oder der mehreren Schubdüsen zum Manövrieren des Handhabungswerkzeugs in Bezug auf die Betonmatratze umfasst.

13. Verfahren nach einem der Ansprüche 9 - 12, wobei ein ROV (51) bereitgestellt wird, wobei der Schritt des Manövrierens des Handhabungswerkzeugs (1) in Bezug auf die Betonmatratze (2) das Steuern des ROV (51) zum Manövrieren des Handhabungswerkzeugs in Bezug auf die Betonmatratze umfasst.

14. Verfahren nach einem der Ansprüche 9 - 13, umfassend den Schritt des Anstellens der Pumpe (42) mit umgekehrter Pumprichtung zum Spritzen in Richtung der Betonmatratze (2) und anschließendem Abstellen der Pumpe (42), wobei dieser Schritt vor dem Schritt des Absenkens des Handhabungswerkzeugs (1) in die zweite Position unter Wasser erfolgt.

15. Computerlesbares Medium mit computerausführbaren Anweisungen, die dafür ausgelegt sind einen 3D-Drucker zu veranlassen, ein Handhabungswerkzeug (1) gemäß einem der vorhergehenden Ansprüche zu drucken.

## Revendications

1. Assemblage d'un matelas en béton sous-marin (2) et d'un outil de manipulation (1) pour la manipulation du matelas en béton, dans lequel le matelas en béton comprend un nombre de blocs de béton (10) qui sont agencés adjacents les uns aux autres à l'intérieur du contour extérieur du matelas en béton, dans lequel les blocs de béton sont reliés les uns aux autres par de multiples fils (11) s'étendant à travers les blocs de béton, de telle manière que des transitions articulables (13) soient présentes entre les blocs de béton, dans lequel l'outil de manipulation (1) comprend une tête d'aspiration (40) ayant un corps de tête d'aspiration (41) avec une ouverture d'entrée sur son côté qui est dirigée vers le matelas en béton, un canal d'écoulement s'étendant à travers la tête d'aspiration (40), et une pompe à eau (42) en communication fluidique avec le canal d'écoulement pour pomper de l'eau à travers le canal d'écoulement (Q) depuis l'ouverture d'entrée, dans lequel l'outil de manipulation (1) est mobile entre une première position sous-marine, à laquelle l'outil de manipulation est positionné au-dessus du matelas en béton (2), et une deuxième position sous-marine, à laquelle la tête d'aspiration (40) est abaissée sur le matelas en béton (2).

2. Assemblage selon la revendication 1, dans lequel l'ouverture d'entrée de la tête d'aspiration (40) s'étend sur un nombre de blocs de béton et au moins une transition entre eux.

3. Assemblage selon la revendication 1 ou 2, dans lequel l'outil de manipulation (1) comprend un cadre (30) et deux têtes d'aspiration (40) ou plus agencées au niveau du cadre, dans lequel les têtes d'aspiration sont espacées les unes des autres à l'intérieur du contour du matelas en béton (2), dans lequel le cadre (30) est de préférence un cadre rectangulaire et les têtes d'aspiration (40) sont agencées au niveau des coins du cadre rectangulaire.

4. Assemblage selon l'une quelconque des revendications précédentes, dans lequel l'outil de manipulation (1) comprend un joint souple (46) relié au corps de tête d'aspiration (41) au niveau de la circonférence (45) de l'ouverture d'entrée de la tête d'aspiration pour sceller des ouvertures entre la tête d'aspiration (40) et le matelas en béton (2) à la deuxième position de l'outil de manipulation (1), dans lequel le joint souple comprend de préférence des volets souples (46) dont une extrémité est reliée au corps de tête d'aspiration au niveau de la circonférence (45) de l'ouverture d'entrée de la tête d'aspiration, dans lequel, à la première position de l'outil de manipulation (1), une extrémité libre des volets (46) est orientée vers le matelas en béton (2), et dans lequel, à la deuxième position de l'outil de manipulation (1), les volets (46) sont répartis sur le matelas en béton (2).

5. Assemblage selon l'une quelconque des revendications précédentes, dans lequel au moins une partie du corps de tête d'aspiration (41) de la tête d'aspiration (40) a une forme sensiblement tronconique ou une forme sensiblement de pyramide tronquée, dans lequel la tête d'aspiration (40) comprend de préférence une ouverture de sortie en communication fluidique avec le canal d'écoulement, dans lequel l'ouverture de sortie est située au-dessus de l'ouverture d'entrée.

6. Assemblage selon l'une quelconque des revendications précédentes, dans lequel l'outil de manipulation (1) comprend de multiples propulseurs (33) pour manœuvrer l'outil de manipulation dans un plan d'eau.

7. Assemblage selon les revendications 3 et 6, dans lequel un propulseur (33) est monté sur le cadre rectangulaire (30) à l'avant, à l'arrière et sur les côtés de celui-ci pour manœuvrer l'outil de manipulation (1) dans le plan d'eau.

8. Assemblage selon l'une quelconque des revendications précédentes, comprenant en outre un ROV (51) (véhicule télécommandé) pour manœuvrer l'outil de manipulation (1).

9. Procédé de manipulation d'un matelas en béton sous-marin (2) par l'utilisation d'un outil de manipulation (1), dans lequel le matelas en béton comprend un nombre de blocs de béton (10) qui sont agencés adjacents les uns aux autres à l'intérieur du contour extérieur du matelas en béton, dans lequel les blocs de béton sont reliés les uns aux autres par de multiples fils (11) s'étendant à travers les blocs de béton, de telle manière que des transitions articulables (13) soient présentes entre les blocs de béton, dans lequel l'outil de manipulation (1) comprend une tête d'aspiration (40) ayant un corps de tête d'aspiration (41) avec une ouverture d'entrée sur son côté qui est dirigée vers le matelas en béton, un canal d'écoulement s'étendant à travers la tête d'aspiration (40), et une pompe à eau (42) en communication fluidique avec le canal d'écoulement pour pomper de l'eau à travers le canal d'écoulement (Q) depuis l'ouverture d'entrée, dans lequel l'outil de manipulation (1) est mobile entre une première position sous-marine, à laquelle l'outil de manipulation est positionné au-dessus du matelas en béton (2), et une deuxième position sous-marine, à laquelle la tête d'aspiration (40) est abaissée sur le matelas en béton (2), et dans lequel le procédé comprend les étapes de placement de l'outil de manipulation (1) dans un plan d'eau, de manœuvre et de positionnement de l'outil de manipulation (1) à la première position par rapport au matelas en béton (2), d'abaissement de l'outil de manipulation (1) à la deuxième position, d'activation de la pompe (42) de la tête d'aspiration (40) pour aspirer le matelas en béton (2) sur la tête d'aspiration, et de levage de l'outil de manipulation (1) avec le matelas en béton (2), pendant que la pompe (42) reste activée.

10. Procédé selon la revendication 9, dans lequel l'ouverture d'entrée de la tête d'aspiration (40) s'étend sur un nombre de blocs de béton et au moins une transition entre eux.

11. Procédé selon la revendication 9 ou 10, comprenant les étapes de déplacement de l'outil de manipulation (1) avec le matelas en béton (2), et de libération du matelas en béton, dans lequel l'étape de déplacement de l'outil de manipulation (1) avec le matelas en béton (2) comprend de préférence le positionnement de l'outil de manipulation (1) avec le matelas en béton (2) au-dessus d'un récipient sous-marin (6) ou d'un chargeur rapide et l'abaissement de l'outil de manipulation (1) avec le matelas en béton (2) dans le récipient (6) ou le chargeur rapide, dans lequel l'étape de libération du matelas en béton (2) comprend la désactivation de la pompe (42).

12. Procédé selon l'une quelconque des revendications 9 à 11, dans lequel l'outil de manipulation (1) comprend de multiples propulseurs (33), dans lequel l'étape de manœuvre de l'outil de manipulation (1) par rapport au matelas en béton (2) comprend la commande des un ou plusieurs propulseurs pour manœuvrer l'outil de manipulation par rapport au matelas en béton.

13. Procédé selon l'une quelconque des revendications 9 à 12, dans lequel un ROV (51) est prévu, dans lequel l'étape de manœuvre de l'outil de manipulation (1) par rapport au matelas en béton (2) comprend la commande du ROV (51) pour manœuvrer l'outil de manipulation par rapport au matelas en béton.

14. Procédé selon l'une quelconque des revendications 9 à 13, comprenant l'étape d'activation de la pompe (42) avec une direction de pompage inverse pour projeter vers le matelas en béton (2) puis la désactivation de la pompe (42), cette étape étant réalisée avant l'étape d'abaissement de l'outil de manipulation (1) à la deuxième position sous-marine.

15. Support lisible par ordinateur comportant des instructions exécutables par ordinateur aptes à amener une imprimante 3D à imprimer un outil de manipulation (1) selon l'une quelconque des revendications précédentes.
